# EUROPÄISCHE PATENTSCHRIFT

(11) **EP 0 879 733 B1**
(45) Veröffentlichungstag und Bekanntmachung des Hinweises auf die Patenterteilung: **03.03.2004**
(21) Anmeldenummer: 98108287.8
(22) Anmeldetag: 07.05.1998
(51) Int. Cl.: B60N 2/24

(54) **Fahrzeugsitz mit Rückenlehne für gepanzertes Militärfahrzeug**
Vehicle seat with backrest for armoured military vehicle
Siège de véhicule à dossier pour véhicule militaire blindé

(30) Priorität: 20.05.1997 DE 19721086
(43) Veröffentlichungstag der Anmeldung: 25.11.1998
(73) Patentinhaber: Krauss-Maffei Wegmann GmbH & Co. KG, 80997 München (DE)
(72) Erfinder: Kobs, Helmut, 87435 Kempten (DE)
(74) Vertreter: Feder, Wolf-Dietrich, Dr. Dipl.-Phys.

(56) Entgegenhaltungen:
- DE-A- 3 521 233
- DE-U- 9 112 732

## Beschreibung

Die Erfindung betrifft einen Fahrzeugsitz mit Rückenlehne, insbesondere, jedoch nicht ausschließlich einen Fahrersitz für ein gepanzertes militärisches oder auch ziviles Nutzfahrzeug. Die Erfindung bezieht sich ferner auf ein mit einem solchen Sitz ausgerüstetes Fahrzeug, insbesondere ein gepanzertes militärisches oder ziviles Nutzfahrzeug.

In Spezialfahrzeugen wie z.B. Kampfpanzern oder anderen gepanzerten militärischen oder zivilen Nutzfahrzeugen muß der Fahrersitz häufig in einem engen Raum angeordnet werden, der auf drei Seiten von starren Wänden des Fahrzeugs begrenzt ist, z.B. vorne und auf der einen Seite von gepanzerten Außenwänden des Fahrzeugs und auf der anderen Seite von einer inneren Trennwand zum Motorraum. Der Zugang des Fahrers zum Fahrersitz ist daher weder von vorne noch von der Seite her möglich. In der Regel erfolgt der Zugang zum Fahrersitz von oben her durch eine Luke in der Decke des Fahrersitzraumes. Aus betrieblichen Gründen und auch nach den Vorschriften der Straßenverkehrszulassungsordnung muß aber noch eine zweite, unabhängige Zugangsmöglichkeit zu dem Fahrersitz gegeben sein. Hierfür kommt nur ein Zugang aus dem hinter dem Fahrersitz gelegenen Fahrzeuginnenraum her in Frage. Ein solcher Zugang von hinten, zwischen den den Fahrersitz zwischen sich einschließenden Wänden, wird aber durch die Rückenlehne des Fahrersitzes versperrt.

Es sind Kraftfahrzeugsitze, sogenannte Liegesitze, bekannt, bei denen die Neigung der Rückenlehne so verstellt werden kann, daß sich die Rückenlehne in einer im wesentlichen horizontalen, mit der Sitzfläche fluchtenden Stellung oder Liegeposition befindet. Wird in einem Fahrzeug der genannten Art ein solcher Liegesitz als Fahrersitz verwendet, so kann durch Absenken der Rückenlehne in die Liegeposition der Zugangsweg von hinten her zur Sitzfläche freigegeben werden. Eine Person, die sich auf diese Weise von hinten her über die abgesenkte Rückenlehne auf die Sitzfläche begeben will, müßte dabei jedoch einen ziemlich langen Weg zurücklegen, der der Summe aus der Länge der Sitzfläche und der Länge der flachgelegten Rückenlehne entspricht. Das Erreichen der Sitzfläche wäre auf diese Weise relativ schwierig und unbequem.

Die Merkmale der Oberbegriffs des Anspruchs 1 sind aus DE3521233 bekannt.

Aus DE 35 21 233 A1 ist eine Rückenlehne für einen Rücksitz eines Kraftfahrzeugs bekannt, die an der Seitenwand des Fahrzeugs um eine im wesentlichen lotrechte Achse schwenkbar gelagert ist und relativ zur Sitzfläche nach vorne in eine Ruhestellung seitlich neben der Sitzfläche geschwenkt werden kann. Dadurch soll der Laderaum des Fahrzeugs vergrößert werden. Für das Problem, einen Zugang für eine Person von hinten in die Sitzposition auf den Sitz zu ermöglichen, ist diese bekannte Konstruktion ungeeignet, weil sich die Rückenlehne nicht mehr in die Normalstellung zurückschwenken läßt, wenn die Person auf der Sitzfläche Platz genommen hat.

Der Erfindung liegt die Aufgabe zugrunde, bei einem Fahrzeug der genannten Art insbesondere den Fahrersitz so zu gestalten, daß er einen erleichterten Zugang zur Sitzfläche von hinten her ermöglicht.

Zur Lösung der Aufabe ist erfindungsgemäß ein Fahrzeug mit den Merkmalen des Anspruchs 1 vorgesehen. Gegenstand der Erfindung ist ferner ein zur Verwendung in dem Fahrzeug geeigneter Sitz gemäß Anspruch 2. Unteranspruch 3 bezieht sich auf eine weitere vorteilhafte Ausgestaltung des Sitzes.

Durch das erfindungsgemäß mögliche Beseiteschwenken der Rückenlehne um eine im wesentlichen lotrechte Schwenkachse nach hinten kann der Fahrer aus dem Innenraum des Fahrzeugs von hinten her seinen Platz auf der Sitzfläche einnehmen und muß sich hierbei nur über die Sitzfläche selbst, nicht aber über die Rückenlehne hinwegbewegen. Die Erfindung ist selbstverständlich nicht nur am Fahrersitz des Fahrzeugs, sondern auch an einem anderen Sitz, bei dem ähnliche beengte Platzverhältnisse vorliegen, anwendbar.

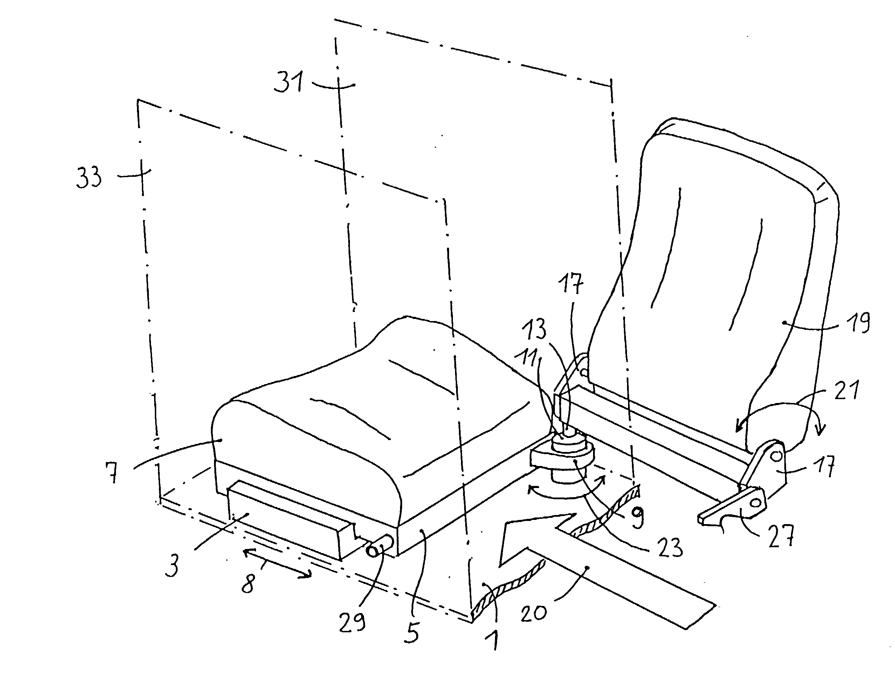

Die Erfindung wird nachstehend anhand eines Ausführungsbeispiels näher erläutert. Die Zeichnung zeigt schematisch eine vereinfachte Ausführungsform des erfindungsgemäßen.

## Patentansprüche

1. Fahrzeug, insbesondere gepanzertes militärisches Fahrzeug, mit einem Sitz, der zwischen starren Wänden (31, 33) des Fahrzeugs angeordnet ist, die den Zugang zur Sitzfläche (7) von der Seite her versperren, und mit einer Rückenlehne (19), die den Zugang zur Sitzfläche (7) von hinten her zwischen den Wänden (31, 33) des Fahrzeugs versperrt, **dadurch gekennzeichnet, daß** die Rückenlehne (19) um eine im Bereich ihrer einen seitlichen Begrenzung angeordnete, im wesentlichen lotrechte Schwenkachse schwenkbar gelagert und bezüglich der Sitzfläche nach hinten in eine zur Längsrichtung der Sitzfläche (7) im wesentlichen parallele Stellung schwenkbar ist, in der sie den Zugang zur Sitzfläche (7) zwischen den Wänden (31, 33) freigibt.

2. Fahrzeugsitz, insbesondere zur Verwendung als in einem Fahrzeug gemäß Anspruch 1, mit einem Sitzrahmen (5) als Träger der Sitzfläche (7) und einer am Sitzrahmen (5) beweglich gelagerten Rückenlehne (19), **dadurch gekennzeichnet, daß** die Rückenlehne (19) in einem am Sitzrahmen (5) befestigten Schwenklager (11) um eine im wesentlichen lotrechte Schwenkachse schwenkbar gelagert und vom Sitzrahmen weg in eine zur Längsrichtung der Sitzfläche (7) des Sitzes annähernd parallele Stellung schwenkbar ist, wobei die Schwenkachse im Bereich der einen seitlichen Begrenzung der Rückenlehne (19) angeordnet ist.

3. Fahrzeugsitz nach Anspruch 2, **dadurch gekennzeichnet, daß** die Rückenlehne (19) um eine horizontale Schwenkachse schwenkbar an einem Rückenlehnenträger (15) gelagert ist, und daß der Rückenlehnenträger (15) in dem Schwenklager (11) um die im wesentlichen vertikale Schwenkachse schwenkbar gelagert ist.

## Claims

1. A vehicle, in particular an armoured military vehicle, having a seat which is arranged between rigid walls (31, 33) of the vehicle, which walls (31, 33) block access to the seat surface (7) from the side, and with a backrest (19) which blocks access to the seat surface (7) from behind between the walls (31, 33) of the vehicle, **characterised in that** the backrest (19) is mounted so as to be swivellable about a substantially vertical pivot axis arranged in the area of its one lateral boundary and may be swivelled relative to the seat surface backwards into a position substantially parallel to the longitudinal direction of the seat surface (7), in which position it allows access to the seat surface (7) between the walls (31, 33).

2. A vehicle seat, in particular for use in a vehicle according to claim 1, having a seat frame (5) as support for the seat surface (7) and a backrest (19) mounted movably on the seat frame (5), **characterised in that** the backrest (19) is mounted in a pivot bearing (11) attached to the seat frame (5) so as to be swivellable about a substantially vertical pivot axis and may be swivelled away from the seat frame into a position approximately parallel to the longitudinal direction of the seat surface (7), wherein the pivot axis is arranged in the area of the one lateral boundary of the backrest (19).

3. A vehicle seat according to claim 2, **characterised in that** the backrest (19) is mounted on a backrest support (15) so as to be swivellable about a horizontal pivot axis and **in that** the backrest support (15) is mounted in the pivot bearing (11) so as to be swivellable about the substantially vertical pivot axis.

## Revendications

1. Véhicule, en particulier véhicule militaire blindé, comportant un siège agencé entre des parois rigides (31, 33) du véhicule qui obstruent l'accès à la surface d'assise (7) depuis le côté, et comportant un dossier ( 19) qui obstrue l'accès à la surface d'assise (7) depuis l'arrière entre les parois (31, 33) du véhicule, **caractérisé en ce que** le dossier (19) est monté en pivotement autour d'un axe de pivotement sensiblement vertical agencé dans la zone de l'une de ses limitations latérales et est susceptible d'être pivoté vers l'arrière par rapport à la surface d'assise jusque dans une position sensiblement parallèle à la direction longitudinale de la surface d'assise (7), position dans laquelle il libère l'accès à la surface d'assise (7) entre les parois (31, 33).

2. Siège de véhicule, en particulier pour l'utilisation dans un véhicule selon la revendication 1, comportant un cadre de siège (5) à titre de support de la surface d'assise (7), et un dossier (19) monté mobile sur le cadre de siège (5), **caractérisé en ce que** le dossier (19) est monté en pivotement autour d'un axe de pivotement sensiblement vertical dans un palier de pivotement (11) fixé sur le cadre de siège (5), et il est monté en pivotement en éloignement du cadre de siège jusque dans une position approximativement parallèle à la direction longitudinale de la surface d'assise (7) du siège, l'axe de pivotement étant agencé dans la zone de l'une des limitations latérales du dossier (19).

3. Siège de véhicule selon la revendication 2, **caractérisé en ce que** le dossier (19) est monté en pivotement autour d'un axe de pivotement horizontal sur un porte-dossier (15), et **en ce que** le porte-dossier (15) est monté en pivotement autour d'un axe de pivotement sensiblement vertical dans un palier de pivotement (11).
